# EUROPÄISCHE PATENTSCHRIFT

(11) **EP 2 153 795 B1**
(45) Veröffentlichungstag und Bekanntmachung des Hinweises auf die Patenterteilung: **19.08.2020**
(21) Anmeldenummer: 09164266.0
(22) Anmeldetag: 01.07.2009
(51) Int. Cl.: A61C 5/62, A61C 5/60

(54) **Applikator**
Applicator
Applicateur

(30) Priorität: 15.08.2008 DE 102008038887
(43) Veröffentlichungstag der Anmeldung: 17.02.2010
(73) Patentinhaber: Ivoclar Vivadent AG, 9494 Schaan (LI)
(72) Erfinder: Müller, Frank, A-6800 Feldkirch (AT); David, Gabriele, Dr., 88131 Lindau (DE)
(74) Vertreter: Baronetzky, Klaus

(56) Entgegenhaltungen:
- EP-A1- 1 317 910
- EP-A2- 0 903 115
- DE-U1- 29 720 493
- US-A- 982 232
- US-A- 5 119 803
- US-A- 5 774 925
- US-A1- 2003 186 195
- US-B1- 6 450 810

## Beschreibung

Die Erfindung betrifft einen Applikator mit einem Schaft und einem Applikatorelement.

Applikatoren der eingangs genannten Art sind dem Fachmann bekannt und finden insbesondere im medizinischen Bereich, und hier besonders in der Zahnmedizin Verwendung.

Die aus dem Stand der Technik bekannten Applikatoren zeichnen sich zumeist dadurch aus, dass sie über einen langgestreckten Griff verfügen, der zumindest an einem Ende mit einem Applikationselement in Form eines saugfähigen Werkstoffs zwecks Verabreichung oder Auftragen unterschiedlicher Zahnmaterialien bzw. Stoffe versehen ist. Hierzu sind beispielsweise Applikatoren mit einem Halteinstrument als Griffstück vorgesehen, die aus einem röhrenförmigen Stift mit einendig angebrachten saugfähigen Werkstoffen, bspw. in Form eines Wattepellets bestehen, wobei das Halteinstrument mit einer Befestigungsvorrichtung derart versehen ist, dass das dem saugfähigen Werkstoff gegenüberliegende Ende des röhrenförmigen Stifts mit dem Halteinstrument verbunden werden kann und zwar derart, dass die Befestigungsvorrichtung als konisch zulaufende Ausnehmung so ausgebildet ist, dass der röhrenförmige Stift in dem Halteinstrument zwecks Klemmwirkung eingesteckt ist.

Zudem können aus dem Stand der Technik bekannte Applikatoren Gelenke oder Knickstellen aufweisen, um die freien Enden eines Applikators relativ zur Längsachse eines Griffstücks zu biegen oder auszulenken, um ein freies Ende in einem gewünschten Arbeitswinkel relativ zu der Längsachse des Griffstücks anzuordnen.

Darüber hinaus sind konstruktive Ausgestaltungen von Applikatoren bekannt, die über einen Schaft verfügen, der gelenkig, bspw. über ein Kugelgelenk, mit dem Griffstück verbunden ist. Ein derartiger Applikator ist bspw. aus der EP 1 317 910 A1 bekannt, aus der zusätzlich hervorgeht, dass das Applikationselement in Gestalt eines Schwamms über eine Stützscheibe mit dem Schaft in Form einer Verklebung fest verbunden ist.

US 2003/186195 offenbart einen Applikator für dentale Anwendungen mit einem Handgriff aus hartem Material und abnehmbaren Applikationselementen aus weichem und elastischem Material.

US 5 119 803 offenbart eine medizinische Einweg-Applikatorspitze des Typs zur Verwendung in einem handgehaltenen Zahnfleischmassagegerät, wobei die Applikatorspitze speziell dafür ausgelegt ist, eine Ladung eines Medikaments zu tragen, so dass, wenn die Spitze über den Zahnfleischbereich bewegt wird, das Zahnfleisch massiert wird, während die Spitze gleichzeitig abgibt Das Medikament für das Zahnfleisch und die Umgebung bietet die notwendige topische Behandlung beim Anblick einer Zahnfleischerkrankung.

US 5 774 925 offenbart ein Mundpflegegerät, das die Beseitigung von Mundgeruch durch gründliche Reinigung des gesamten Mundes mit Reibung ermöglicht, einschließlich der Zunge, der Zähne, des Zahnfleisches, der Lippen, der Wangen, des Bereichs unter der Zunge und des Bereichs zwischen Zahnfleisch und Wangen. Die Vorrichtung umfasst einen sterilen Schwamm, der an einem starren Griff angebracht ist und die herkömmliche Zahnbürste ersetzen oder verbessern kann.

Diese aus dem Stand der Technik bekannten Applikatoren haben jedoch konstruktionsbedingt den Nachteil, dass die Applikationselemente entweder nicht auswechselbar sind oder durch Hineinstecken in eine Ausnehmung eines Schafts nicht ausreichend auf den Schaft des Applikators gelagert sind.

Ausgehend von den dargelegten Nachteilen sowie unter Würdigung des aufgezeigten Standes der Technik bei Applikatoren der eingangs genannten Art liegt der vorliegenden Erfindung daher die Aufgabe zugrunde, einen Applikator derart weiterzubilden, dass eine ausreichende Lagerung des Applikationselements sowie eine Auswechselbarkeit desselben gegeben ist.

Diese Aufgabe wird erfindungsgemäß durch Anspruch 1 gelöst. Vorteilhafte Weiterbildungen der Erfindung ergeben sich aus den Unteransprüchen.

Erfindungsgemäß ist ein Aufnahmebereich des Schaftes von dem Applikationselement in Gestalt eines Schaftaufsatzes form-, reib- und/oder kraftschlüssig sowie lösbar umgeben, insofern ist der Schaftaufsatz mit dem Aufnahmebereich verbindbar.

Kernidee der Erfindung ist es, ein Applikationselement zur Verfügung zu stellen, welches eine unmittelbare Lagerung auf den Schaft gewährleistet. Dadurch, dass ein Aufnahmebereich des Schaftes von einem Applikationselement in Gestalt eines Schaftaufsatzes form- und/oder kraftschlüssig umgeben ist, ist eine unmittelbare Lagerung des Applikationselementes auf dem Schaft gegeben. Das Applikationselement ist also gemäß der Erfindung weder mit dem Schaft verklebt noch in eine Ausnehmung des Schaftes hineingesteckt. In einer hier verwendeten Terminologie bildet ein Teil der Schaftoberfläche oder die gesamte Oberfläche des Schafts den Aufnahmebereich, d. h. den Bereich, der in unmittelbarer form- und/oder kraftschlüssiger Verbindung mit dem Schaftaufsatz steht.

Dadurch, dass die Lösbarkeit des Schaftaufsatzes von dem Schaft im Rahmen der Erfindung gegeben ist, kommt die Erfindung zudem dem dringenden Wunsch entgegen, ein Applikationselement nur einmal zu verwenden und dieses danach zu entsorgen.

Der Aufnahmebereich des Schaftes kann dabei von dem Schaftaufsatz derart form- und/ oder kraftschlüssig umgeben sein, dass der langgestreckte Teil des Aufnahmebereichs von dem Schaftaufsatz hülsenförmig umgeben ist. Auch ist der Aufnahmebereich von dem Schaftaufsatz umhüllt.

Zweckmäßigerweise weist der Schaftaufsatz innenseitig eine Profilierung und der Aufnahmebereich des Schaftes eine entsprechende Gegenprofilierung auf. Auf diese Weise wird eine besonders einfache form- und/oder kraftschlüssige Verbindung des Schaftaufsatzes mit dem Aufnahmebereich des Schaftes geschaffen. Insbesondere kann im Rahmen der Erfindung vorgesehen sein, dass die Profilierung in Gestalt eines Vorsprungs und die Gegenprofilierung als Vertiefung vorliegt.

Um zahnmedizinischen Applikationen Rechnung zu tragen, sieht eine Ausgestaltung der Erfindung zudem vor, dass der Schaftaufsatz elastisch ausgebildet ist und wenigstens teilweise mit einer, eine weiche Oberfläche aufweisenden Beschichtung überzogen ist, wobei die Beschichtung aus einem Flock und/oder Borsten bestehen kann. Vorteilhafterweise ist der Schaft des Applikators einstückig mit einem Handstück verbunden und/oder zwischen dem Schaft und dem Handstück eine Knickstelle ausgebildet, mit deren Hilfe der Schaft gegenüber dem Randstück geneigt anordbar ist. Durch die Knickstelle ist gewährleistet, dass der Applikator zwischen Schaft und Griffbereich in einem gewünschten Arbeitswinkel relativ zur Längsachse des Griffbereichs angeordnet werden kann.

Um den Applikator manuell gut zu handhaben, sieht eine praktikable Variante der Erfindung vor, dass der Griffbereich eine profilierte Oberfläche aufweist.

Im Rahmen der Erfindung ist es auch möglich, dass der Schaft des Applikators form- und/' oder kraftschlüssig mit einem Handstück oder einer angetriebenen Welle eines Gerätes verbindbar ist. Bei diesem Gerät kann es sich um ein externes motorisch angetriebenes Gerät handeln.

Gemäß einer günstigen Ausgestaltung ist es vorgesehen, dass der elastische Aufsatz aus Elastomer oder Gummi gebildet ist, und der Schaft ist an seinem freien Ende als Zapfen ausgebildet, der von dem Schaftaufsatz hülsenförmig übergriffen wird.

Gemäß einer weiteren günstigen Ausgestaltung ist es vorgesehen, dass der elastische Aufsatz und der Aufnahmebereich des Schaftes formschlüssig ineinandergreifende Profilierungen, insbesondere der Aufsatz innenseitig eine Profilierung und der Aufnahmebereich des Schaftes eine entsprechende Gegenprofilierung, insbesondere wenigstens eines Vorsprungs und wenigstens eine Vertiefung aufweisen.

Gemäß einer weiteren günstigen Ausgestaltung ist es vorgesehen, dass der elastische Aufsatz einen runden und/oder elliptisch und/oder eckigen äußeren Querschnitt aufweist und/oder pyramidenförmig und/oder kegelförmig ausgebildet ist.

Erfindungsgemäß ist es vorgesehen, dass der Schaftaufsatz eine dem Aufnahmebereich des Schaftes entsprechende Innenkontur aufweist, wobei insbesondere der Aufnahmebereich ein Übermaß gegenüber der Innenkontur aufweist.

Bevorzugt ist er um 10 bis 20 Prozent größer als die Innenkontur, so dass ein fester Sitz gewährleistet ist. Dieser kann auch durch Rastvorrichtungen oder Hinterschneidungen weiter unterstützt werden.

Gemäß einer weiteren günstigen Ausgestaltung ist es vorgesehen, dass der Schaftaufsatz mit einem Applikationsmedium, beispielsweise mit einem fließfähigem Medium benetzbar ist.

Gemäß einer weiteren günstigen Ausgestaltung ist es vorgesehen, dass sich das freie Ende des Schaftaufsatzes zu einem Punkt oder einer Linie verjüngt.

Erfindungsgemäß ist es vorgesehen, dass der Schaftaufsatz wenigstens teilweise mit einer, eine weiche Oberfläche aufweisende Beschichtung überzogen ist, die bevorzugt aus einem Flock und/oder Borsten besteht. Diese können mit einer dentalen Flüssigkeit benetzt sein oder dienen der Aufnahme eines fliessfähigen oder pulverförmigen Mediums.

Durch Ausbildung des Schaftaufsatzes und die Beschichtung in unterschiedlichen Farben und/oder mit unterschiedlichen haptischen Eigenschaften lassen sich einzelen Applikatoren leicht voneinander unterscheiden, auch eine Handhabung ohne hinzuschauen ist dann möglich.

Gemäß einer weiteren günstigen Ausgestaltung ist es vorgesehen, dass der Schaft einstückig mit einem Handstück verbunden ist, und insbesondere, dass der Schaft form- und/ oder kraftschlüssig mit dem Handstück oder einer angetriebenen Welle eines Gerätes verbindbar ist.

Gemäß einer weiteren günstigen Ausgestaltung ist es vorgesehen, dass das Handstück einen Griffbereich mit einer profilierten Oberfläche aufweist, und insbesondere einen grösseren Aussendurchmesser als das Handstück im übrigen. Der Griffbereich ist bevorzugt an einer dem Aufnahmebereich nahen Stelle des Schafts angeordnet.

Gemäß einer weiteren günstigen Ausgestaltung ist es vorgesehen, dass das Handstück in einem vom Schaft abgewandten Endbereich einen Beschriftungsbereich aufweist, dessen Dicke kleiner als der Durchmesser des Handstückes ist und dessen in radialer Richtung gemessene Breite größer als der Durchmesser des Schaftes ist.

Weitere Vorteile, Einzelheiten und Merkmale ergeben sich aus der nachfolgenden Beschreibung der Ausführungsbeispiele der Erfindung anhand der Zeichnungen.

Es zeigen in schematischen Darstellungen:
Fig. 1 einen erfindungsgemäßen Applikator;
Fig. 2 eine weitere Ausführungsform des erfindungsgemäßen Applikators;
Fig. 3 einen Endbereich des erfindungsgemäßen Applikators;
Fig. 4a bis 4d verschiedene Ausführungsformen des Schaftaufsatzes des Applikators gemäß der Erfindung; und
Fig. 5a bis 5c die Beschaffenheit der Innen- und Außenseite des Schaftaufsatzes des erfindungsgemäßen Applikators.

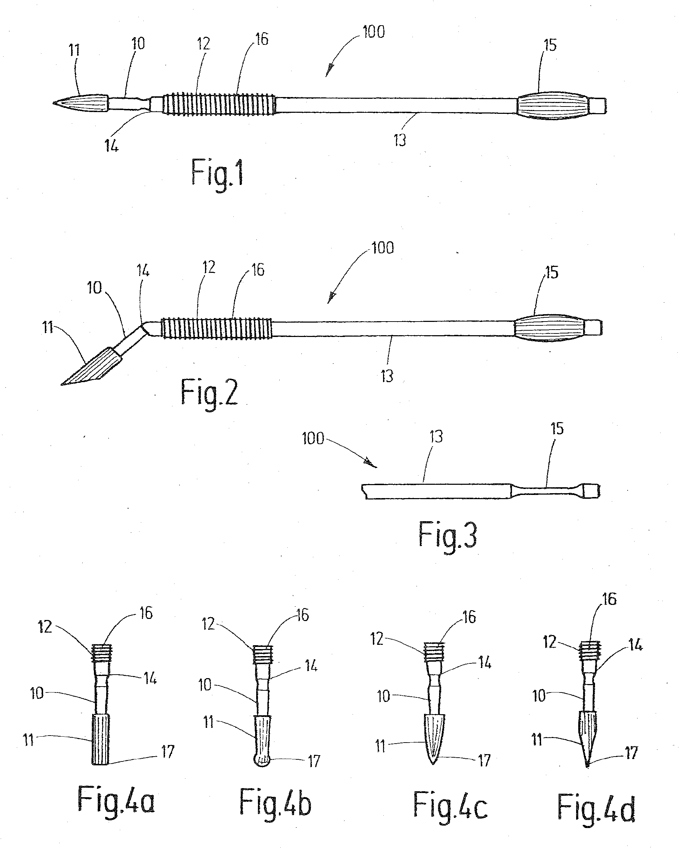

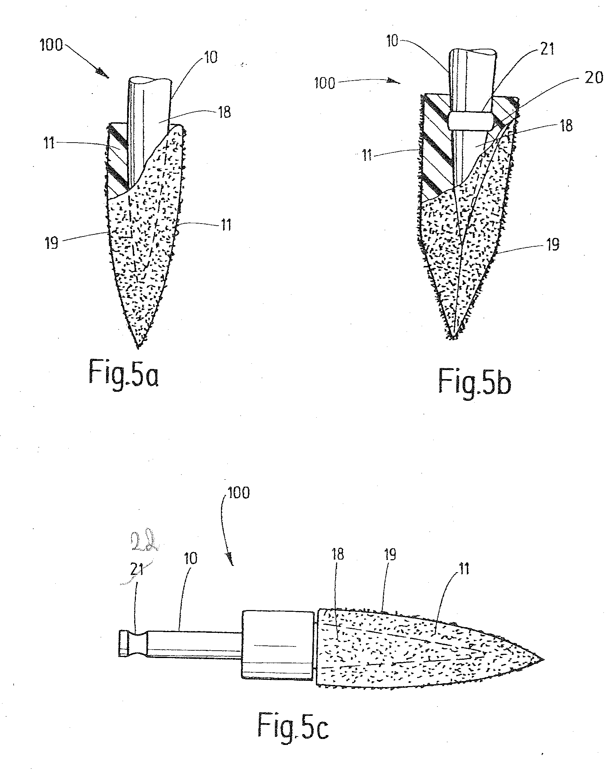

In Fig. 1 ist ein Applikator dargestellt, der mit dem Bezugszeichen 100 versehen ist. Der Applikator 100 ist ein langgestrecktes Gebilde, das zudem an einem Ende einen Schaft 10 aufweist. Der Schaft 10 weist wiederum einen in Fig. 5a und 5b gezeigten Aufnahmebereich 18 auf, der mit dem Schaftaufsatz 11 form- und/oder kraftschlüssig sowie lösbar verbunden ist. Der Aufnahmebereich 18 des Schaftes 10 steht also in unmittelbarem Kontakt mit der in Fig. 1 nicht gezeigten Innenseite des Schaftaufsatzes 11. Der Aufnahmebereich 18 ist also die Oberfläche 16 oder Teil der Oberfläche des Schafts 10. An der dem Schaftaufsatz 11 abgewandten Seite des Schafts 10 schließt sich ein Griffbereich 12 an, der eine profilierte Oberfläche 16 aufweist. Der Griffbereich 12 ist Teil des Handstücks 13, welches in der hier gezeigten Ausführungsform im Querschnitt von runder Form ist. Zwischen dem Griffbereich 12 und dem Schaft 10 befindet sich ein zum Schaft 10 hin verjüngender Teil, der als Knickstelle 14 zwischen dem Griffbereich 12 und dem Schaft 10 fungiert. Wie aus Figur 2 hervorgeht, ist die Knickstelle 14 derart gestaltet, dass mit deren Hilfe der Schaft 10 gegenüber dem Handstück 13 geneigt anordbar ist. Hierzu kann die Knickstelle 14 gelenkig mit dem Handstück 13 verbunden oder von einer elastischen und dünnen Beschaffenheit sein.

Wie aus den Fig. 1 und Fig. 2 weiterhin hervorgeht, weist das Handstück 13 in einem vom Schaft 10 abgewandten Endbereich einen Bereich 15 auf, dessen in radialer Richtung gemessene Breite größer als der Durchmesser des Schafts 10 ist. Wie in Fig. 3 schematisch und in Seitenansicht dargestellt ist, weist der Bereich 15 darüber hinaus eine Dicke auf, die kleiner als der Durchmesser des Handstücks 13 ist. Der Griffbereich 12 und das Handstück 13 sowie der Bereich 15 sind einteilig ausgeformt. Der Bereich 15 kann als Beschriftungsbereich dienen, um den Applikator 100 mit diversen Beschriftungen zu versehen. Die Figuren 1 und 2 veranschaulichen weiterhin, dass der Griffbereich 12 einen größeren Außendurchmesser, als der restliche Teil des Handstücks 13 aufweist. Der Schaft 10 und das Handstück 13 können jeweils aus Kunststoff, insbesondere aus Polypropylen, bestehen. Der Applikator 100 weist sich also unter anderem dadurch aus, dass der Schaftaufsatz 11 auf den Schaft 10 aufgesteckt und nicht in den Schaft 10 eingesteckt ist.

Wie aus den Figuren 4a - 4d hervorgeht, kann der auf dem Schaft 10 aufgesteckte Schaftaufsatz 11 unterschiedlich ausgeformt sein. Die in den Figuren 4a bis 4d gezeigten Ausführungsformen des Schaftaufsatzes 11 zeigen, dass der Schaftaufsatz 11 außenseitig von runder Gestalt ist, wobei sich das freie Ende 17 des Schaftaufsatzes 11 zu einem Punkt (Fig. 4c) oder einer Linie (Fig. 4d) verjüngt. Wie die Figuren 4a und 4b veranschaulichen, kann der Schaftaufsatz 11 an seinem freien Ende 17 auch eine der Querschnittsfläche des Schaftaufsatzes 10 konforme Fläche (Fig. 4a) oder eine im Wesentlichen kugelförmige Aufweitung (Fig. 4b) aufweisen.

Die Figuren 5a bis 5c, die jeweils einen Teilausschnitt des Applikators 100 zeigen, veranschaulichen, dass der Aufnahmebereich 18 in direktem Kontakt mit dem Schaftaufsatz 11 steht. Der Schaftaufsatz 11 ist auf den Schaft 10 derart aufgesteckt, dass der Schaftaufsatz 11 den Schaft 10 umhüllt. Der Schaft 10 ist dabei dergestalt, dass er an seinem freien Ende als Zapfen ausgebildet ist. Der Schaftaufsatz 11 ist elastisch ausgebildet, wobei der Schaftaufsatz 11 mit einer Profilierung und der Aufnahmebereich 18 des Schafts 10 mit einer entsprechenden Gegenprofilierung versehen ist. Profilierung und Gegenprofilierung können auch, wie aus Fig. 5b hervorgeht, in Gestalt eines Vorsprungs 21 und einer Vertiefung 20 vorliegen. Der Schaftaufsatz 11, der aus Elastomer oder Gummi gebildet sein kann, ist zumindest teilweise mit einer, eine weiche Oberfläche aufweisende Beschichtung 19 überzogen. Die Beschichtung 19 kann aus einem Flock und/oder Borsten bestehen.

Die vorliegende Erfindung beschränkt sich in ihrer Ausführungsform nicht auf die vorstehend angegebenen, bevorzugten Ausführungsbeispiele. Vielmehr ist eine Anzahl von Varianten denkbar, welche von der dargestellten Lösung auch bei grundsätzlich anders gearteten Ausführungen Gebrauch machen. Somit können bspw. der Flock und/oder die Borsten noch zusätzlich mit einer dentalen Flüssigkeit benetzt sein oder der Aufnahme eines fließfähigen oder pulverförmigen Mediums dienen. Auch kann, wie Fig. 5c zeigt, im Bereich der Knickstelle 14 eine Verbindungsnut 21 ausgeformt sein, die der Verbindung mit dem Handstück 13 dient. Zudem kann der Schaftaufsatz 11 außenseitig verschiedenartig, bspw. elliptisch, eckig, pyramidenförmig oder kegelförmig ausgebildet sein.

## Patentansprüche

1. Applikator (100), insbesondere für dentale Anwendungen, mit einem Schaft (10) und mit Applikationselement (11, 19) mit einer weichen, äusseren Oberfläche (19), wobei die weiche, äußere Oberfläche (19) des Applikationselements (11, 19) eine insbesondere aus einem Flock und/oder Borsten bestehende Beschichtung (19) umfasst, mit der das Applikationselement (11, 19) wenigstens teilweise überzogen ist, wobei
das Applikationselement (11, 19) lösbar auf einem Aufnahmebereich (18) des Schaftes (10) angeordnet und von einem elastischen Schaftaufsatz (11) gebildet ist, der mit dem Aufnahmebereich (18) reibschlüssig und kraftschlüssig verbindbar ist, wobei der Schaft (10) an seinem freien Ende als Zapfen ausgebildet ist, der von dem Schaftaufsatz (11) hülsenförmig übergriffen ist und wobei der Schaftaufsatz (11) eine dem Aufnahmebereich des Schaftes (10) entsprechende Innenkontur aufweist, mit einem Übermaß des Aufnahmebereichs, von insbesondere 10 bis 20%, gegenüber der Innenkontur.

2. Applikator nach Anspruch 1, **dadurch gekennzeichnet, dass** der Schaftaufsatz (11) Elastomer oder Gummi aufweist.

3. Applikator nach einem der vorhergehenden Ansprüche, **dadurch gekennzeichnet, dass** der elastische Aufsatz und der Aufnahmebereich (18) des Schaftes (10) formschlüssig ineinandergreifende Profilierungen, insbesondere wenigstens eines Vorsprungs (21) und wenigstens eine Vertiefung (20) aufweisen.

4. Applikator nach einem der vorhergehenden Ansprüche, **dadurch gekennzeichnet, dass** der elastische Aufsatz einen runden und/oder elliptischen und/oder eckigen äußeren Querschnitt aufweist und/oder kegelförmig ausgebildet ist.

5. Applikator nach einem der vorhergehenden Ansprüche, **dadurch gekennzeichnet, dass** sich das freie Ende des Schaftaufsatzes (11) zu einem Punkt oder einer Linie verjüngt.

6. Applikator nach einem der vorhergehenden Ansprüche, **dadurch gekennzeichnet, dass** der Schaftaufsatz (11) mit einem Applikationsmedium, beispielsweise mit einem fließfähigem Medium benetzbar ist.

7. Applikator nach einem der vorhergehenden Ansprüche, **dadurch gekennzeichnet, dass** der Schaftaufsatz (11) und/oder die Beschichtung in unterschiedlichen Farben und/oder mit unterschiedlichen haptischen Eigenschaften ausgebildet sind.

8. Applikator nach einem der vorhergehenden Ansprüche, **dadurch gekennzeichnet, dass** der Schaft (10) einstückig mit einem Handstück (13) verbunden ist.

9. Applikator nach einem der vorhergehenden Ansprüche, **dadurch gekennzeichnet, dass** zwischen dem Schaft (10) und dem Aufnahmebereich (18) eine Knickstelle (14) ausgebildet ist, mit deren Hilfe der Schaft (10) gegenüber dem Aufnahmebereich (18) in eine geneigte Stellung bringbar ist, insbesondere dauerhaft.

10. Applikator nach einem der vorhergehenden Ansprüche, **dadurch gekennzeichnet, dass** der Schaft (10) form- und/oder kraftschlüssig mit dem Handstück (13) oder einer angetriebenen Welle eines Gerätes verbindbar ist.

11. Applikator nach einem der Ansprüche 9 oder 10, **dadurch gekennzeichnet, dass** das Handstück (13) einen Griffbereich mit einer profilierten Oberfläche aufweist.

12. Applikator nach einem der Ansprüche 9 bis 11, **dadurch gekennzeichnet, dass** das Handstück (13) in einem vom Schaft (10) abgewandten Endbereich einen Beschriftungsbereich aufweist, dessen Dicke insbesondere kleiner als der Durchmesser des Handstückes (13) ist und dessen in radialer Richtung gemessene Bereite größer als der Durchmesser des Schaftes (10) ist.

## Claims

1. An applicator (100), especially for dental applications, comprising a shaft (10) and an application element (11, 19) having a soft, external surface (19), the soft, external surface (19) of the application element (11, 19) comprising a coating (19) especially consisting of a flock and/or bristles, which are at least partially coated onto the application element (11, 19), the application element (11, 19) being detachably arranged on a receiving region (18) of the shaft (10) and is formed by an elastic shaft attachment (11) which is frictionally and force-fittingly attachable to the receiving region (18), the shaft (10), at its free end, being formed as a pin, which is overlapped by the shank attachment (11) in the form of a sleeve and wherein the shank attachment (11) has an inner contour corresponding to the receiving region of the shank (10), the receiving region being oversized by especially 10 to 20% with respect to the inner contour.

2. The applicator according to claim 1, **characterized in that** the shaft attachment (11) comprises elastomer or rubber.

3. The applicator according to one of the preceding claims, **characterized in that** the elastic attachment and the receiving region (18) of the shaft (10) comprise patterns form-fittingly engaging into each other, especially at least one projection (21) and at least one recess (20).

4. The applicator according to one of the preceding claims, **characterized in that** the elastic attachment has a circular and/or elliptical and/or angular external cross-section and/or is formed in a conical shape.

5. The applicator according to one of the preceding claims, **characterized in that** the free end of the shaft attachment (11) tapers to a point or a line.

6. The applicator according to one of the preceding claims, **characterized in that** the shaft attachment (11) is wettable using an application medium, for example a flowable medium.

7. The applicator according to one of the preceding claims, **characterized in that** the shaft attachment (11) and/or the coating are designed in different colors and/or with different haptic properties.

8. The applicator according to one of the preceding claims, **characterized in that** the shaft (10) is integrally connected to a handpiece (13).

9. The applicator according to one of the preceding claims, **characterized in that** a kink (14) is formed between the shaft (10) and the receiving region (18), the shaft (10) can be taken into an inclined position, especially permanently, in relation to the receiving region (18).

10. The applicator according to one of the preceding claims, **characterized in that** the shaft (10) is form-fittingly and/or force-fittingly attachable to the handpiece (13) or a driven shaft of a device.

11. The applicator according to one of the claims 9 or 10, **characterized in that** the handpiece (13) comprises a grip region having a patterned surface.

12. The applicator according to one of claims 9 to 11, **characterized in that** the handpiece (13), in an end region remote from the shaft (10), comprises a marking region the thickness of which is especially smaller than the diameter of the handpiece (13) and the width of which, as measured in the radial direction, is greater than the diameter of the shaft (10).

## Revendications

1. Applicateur (100), en particulier pour des applications dentaires, comportant une tige (10) et un élément applicateur (11, 19) avec une surface extérieure (19) souple, où la surface extérieure souple (19) de l'élément applicateur (11, 19) comporte une surface (19) constitué en particulier d'un flocage et/ou de poils, avec lequel l'élément applicateur (11, 19) est au moins partiellement recouvert, où l'élément applicateur (11, 19) est disposé de manière amovible sur une zone de réception (18) de la tige (10) et est formé par une fixation élastique de la tige (11) qui peut être reliée par friction et sous l'action de force à la zone de réception (18), où la tige (10) est conçue comme une broche à son extrémité libre, qui est recouverte par la fixation de la tige (11) en forme de manchon, et où la fixation de la tige (11) présente un contour intérieur correspondant à la zone de réception de la tige (10), la zone de réception étant surdimensionné en particulier de 10 à 20% par rapport au contour intérieur.

2. Applicateur selon la revendication 1, **caractérisé en ce que** la fixation de la tige (11) présente de l'élastomère ou du caoutchouc.

3. Applicateur selon l'une des revendications précédentes, **caractérisé en ce que** la fixation élastique et la zone de réception (18) de la tige (10) présentent des profils qui s'engagent l'un dans l'autre par complémentarité de forme, en particulier au moins une saillie (21) et au moins un évidement (20).

4. Applicateur selon l'une des revendications précédentes, **caractérisé en ce que** la fixation élastique présente une section transversale extérieure ronde et/ou elliptique et/ou angulaire et/ou est de forme conique.

5. Applicateur selon l'une des revendications précédentes, **caractérisé en ce que** l'extrémité libre de la fixation de la tige (11) se rétrécit en un point ou une ligne.

6. Applicateur selon l'une des revendications précédentes, **caractérisé en ce que** la fixation de la tige (11) peut être mouillée avec un milieu applicateur, par exemple avec un milieu fluide.

7. Applicateur selon l'une des revendications précédentes, **caractérisé en ce que** la fixation de la tige (11) et/ou le revêtement sont conçus en différentes couleurs et/ou avec différentes propriétés haptiques.

8. Applicateur selon l'une des revendications précédentes, **caractérisé en ce que** la tige (10) est reliée en une seule pièce à une pièce à main (13).

9. Applicateur selon l'une des revendications précédentes, **caractérisé en ce qu'**un pli (14) est formé entre la tige (10) et la zone de réception (18), à l'aide duquel la tige (10) peut être amenée dans une position inclinée, surtout en permanence par rapport à la zone de réception (18).

10. Applicateur selon l'une des revendications précédentes, **caractérisé en ce que** la tige (10) peut être reliée par complémentarité de forme et/ou sous l'action de force à la pièce à main (13) ou à un arbre entraîné d'un appareil.

11. Applicateur selon l'une des revendications 9 ou 10, **caractérisé en ce que** la pièce à main (13) présente une zone de préhension avec une surface profilée.

12. Applicateur selon l'une des revendications 9 à 11, **caractérisé en ce que** la pièce à main (13) présente dans une zone d'extrémité éloignée de la tige (10) une zone de marquage dont l'épaisseur est notamment inférieure au diamètre de la pièce à main (13) et dont la largeur, mesurée dans le sens radial, est supérieure au diamètre de la tige (10).
